# EUROPÄISCHE PATENTSCHRIFT

(11) **EP 2 366 992 B1**
(45) Veröffentlichungstag und Bekanntmachung des Hinweises auf die Patenterteilung: **25.10.2023**
(21) Anmeldenummer: 11155298.0
(22) Anmeldetag: 22.02.2011
(51) Int. Cl.: G01N 21/65, G01J 3/44

(54) **VORRICHTUNG UND VERFAHREN ZUR MULTIMODIALEN BILDGEBUNG IN DER NICHTLINEAREN RAMAN-MIKROSKOPIE**
DEVICE AND METHOD FOR MULTIMODAL IMAGING IN NON-LINEAR RAMAN MICROSCOPY
DISPOSITIF ET PROCÉDÉ DE FORMATION D'IMAGE MULTIMODAL DANS LA MICROSCOPIE RAMAN NON LINÉAIRE

(30) Priorität: 15.03.2010 DE 102010015964
(43) Veröffentlichungstag der Anmeldung: 21.09.2011
(73) Patentinhaber: Leica Microsystems CMS GmbH, 35578 Wetzlar (DE)
(72) Erfinder: Krishnamachari, Vishnu Vardhan, 68199 Mannheim (DE)
(74) Vertreter: Schaumburg und Partner Patentanwälte mbB

(56) Entgegenhaltungen:
- EP-A1- 2 157 415
- US-A1- 2006 238 745
- Lina Guo ET AL: "Theoretical investigation on Raman induced kerr effect spectroscopy in nonlinear confocal microscopy", Science in China Series G: Physics, Mechanics and Astronomy, vol. 51, no. 7, 22 June 2008 (2008-06-22), pages 788-796, XP055647051, Beijing ISSN: 1672-1799, DOI: 10.1007/s11433-008-0086-6

## Beschreibung

Die Erfindung betrifft eine Vorrichtung und ein Verfahren zum mikroskopischen Untersuchen eines Objekts. Die Vorrichtung hat ein Beleuchtungssystem und einen ersten Polarisationsfilter. Das Beleuchtungssystem erzeugt einen ersten Beleuchtungslichtstrahl und einen zweiten Beleuchtungslichtstrahl. Der erste Polarisationsfilter polarisiert den ersten Beleuchtungslichtstrahl zirkular.

Es sind unterschiedliche Raman-Techniken bekannt, um biologische und biochemische Proben zu untersuchen. Die lineare Raman-Mikroskopie besteht darin, eine Probe mit einem starken Laserstrahl zu bestrahlen und das frequenzmodulierte von der Probe ausgehende Detektionslicht zu detektieren. Diese Technik ist jedoch zu langsam, um Vorgänge in den biologischen und biochemischen Proben in Echtzeit ausreichend präzise zu detektieren.

Darüber hinaus sind nicht lineare Raman-Techniken bekannt, um das Problem der zu langsamen Bilddarstellung zu lösen. Zu diesen nicht linearen Raman-Techniken gehört das Beobachten von kohärenter Antistokes- und Stokes-Streuung (CARS, CSRS). Dabei wird die Probe kolinear mit Strahlung zweier unterschiedlicher Frequenzen bestrahlt. Sobald der Unterschied zwischen den beiden Frequenzen einer Vibrationsresonanzfrequenz in der Probe entspricht, so emittiert die Probe starke Stokes- und Antistokes-Strahlung, welche einzeln oder gleichzeitig detektiert werden können.

Eine weitere nicht lineare Raman-Technik, die zum Mikroskopieren verwendet wird, ist die stimulierte Raman-Streuung (SRS), insbesondere die ,Stimulated Raman Gain' (SRG) oder die ,Stimulated Raman Loss' (SRL). Dabei wird die Probe ähnlich der kohärenten Stokes- oder Antistokes-Streuung mit Strahlung zweier unterschiedlicher Frequenzen bestrahlt. Falls die Probe eine Resonanz-Frequenz hat, die mit der Differenz der beiden anregenden Frequenzen übereinstimmt, wird Energie von der Strahlung mit höherer Frequenz auf die Strahlung mit niedrigerer Frequenz übertragen. Diese Veränderung der Energie wird beobachtet und erlaubt Rückschlüsse auf die Strukturen und Vorgänge in der Probe. Dabei wird das Beobachten der Zunahme der Energie bei der niedrigeren Frequenz als SRG und das Beobachten der entsprechenden Abnahme der Energie bei der höheren Frequenz als SRL bezeichnet.

Ein Problem bei diesen Techniken ist, dass die anregende Strahlung und die Detektionsstrahlung die gleiche Wellenlänge und Polarisation haben. Somit ergibt sich für das Detektionssignal ein sehr starkes Hintergrundsignal, welches die Detektion des gesuchten Signals erschwert. Eine Möglichkeit, den Hintergrund bei SRS zu unterdrücken, ist das Modulieren der anregenden Strahlung. Ein weiterer Nachteil von CARS oder CSRS ist, dass das aus der Detektionsstrahlung gewonnene Bild chemisch nicht spezifizierbare Informationen enthält, da mit CARS bzw. CSRS gewonnene Bilder auch nicht resonante Signale umfassen.

Eine Raman-Technik, die die Vorteile aber keine Nachteile der vorgenannten Techniken hat, ist das Beobachten des Raman-induzierten Kerr-Effekts (RIKES). Dabei wird die Probe wieder mit Strahlung zweier unterschiedlicher Frequenzen bestrahlt, wobei die Strahlung der einen Frequenz zirkular und die andere linear polarisiert ist. Das daraufhin von der Probe emittierte RIKES-Signal ist orthogonal zu der einfallenden Strahlung der gleichen Frequenz polarisiert. Das RIKES-Signal ist schnell und chemisch spezifisch, jedoch ist es verglichen mit den anderen Detektionssignalen relativ schwach.

US 2008/0304047 A1 beschreibt eine Vorrichtung zum mikroskopischen Untersuchen eines Objekts, die ein Beleuchtungssystem umfasst, das einen ersten Beleuchtungslichtstrahl und einen zweiten Beleuchtungslichtstrahl erzeugt, wobei ein Modulator einen der Beleuchtungslichtstrahlen moduliert. Der modulierte erste Beleuchtungslichtstrahl wird mit Hilfe eines ersten Polarisationsfilters und der zweite Beleuchtungslichtstrahl wird mit Hilfe eines zweiten Polarisationsfilters linear polarisiert. Eine Detektionsoptik richtet die von dem Objekt ausgehenden Detektionslichtstrahlen auf mindestens zwei Detektoreinheiten, wobei eine erste Detektoreinheit eine Vierwellenmischung detektiert und diese Detektionsstrahlen eine erste Polarisation aufweisen. Eine zweite Detektoreinheit detektiert eine zweite Vierwellenmischung, wobei diese Detektionsstrahlen gegenüber den mit Hilfe der ersten Detektoreinheit detektierten Detektionsstrahlen eine Polarisation aufweisen, die um 90° gedreht ist.

US 2006/238745 A1 beschreibt eine Vorrichtung zum mikroskopischen Untersuchen eines Objekts, mit einem Beleuchtungssystem, das einen ersten Beleuchtungslichtstrahl (in einem Stokes-Laser) und einen zweiten Beleuchtungslichtstrahl (in einem Pump-Laser) erzeugt. Ein erster Polarisationsfilter erzeugt für den ersten Beleuchtungslichtstrahl eine Polarisierung und ein zweiter Polarisationsfilter erzeugt für den zweiten Beleuchtungslichtstrahl eine Polarisierung. Die Vorrichtung enthält einen Modulator zum Modulieren des polarisierten zweiten Beleuchtungslichtstrahls, eine Anregungsoptik, die die beiden Beleuchtungslichtstrahlen auf ein Objekt lenkt und eine Detektionsoptik, die von dem Objekt ausgehende Detektionslichtstrahlen auf zwei Detektoreinheiten richtet. Eine erste Detektoreinheit detektiert einen ersten nicht linearen Raman-Effekt (CARS) und eine zweite Detektoreinheit detektiert einen anderen Effekt ("second harmonic wave). Eine zirkulare Polarisierung des ersten Beleuchtungslichtstrahls und die Erfassung eines zweiten nicht linearen Raman-Effektes erfolgt nicht.

EP 2 157 415 A1 beschreibt die Detektion von SRS, einem anderen nicht linearen Raman-Effekt. Die Anwendung von zirkular polarisiertem Licht wird nicht beschrieben.

Zum Stand der Technik wird ferner auf das folgende Dokument verweisen: Lina Guo ET AL: "Theoretical investigation on Raman induced kerr effect spectroscopy in nonlinear confocal microscopy", Science in China Series G: Physics, Mechanics and Astronomy, Bd. 51, Nr. 7, 22. Juni 2008 (2008-06-22), Seiten 788-796, XP055647051, Beijing ISSN: 1672-1799, DOI: 10.1007/s11433-008-0086-6.

Aufgabe der Erfindung ist es, ein Verfahren und eine Vorrichtung zum mikroskopischen Untersuchen eines Objekts zu schaffen, die es ermöglichen, schnell ablaufende mikroskopische Vorgänge mit einer hohen chemischen Präzision aufzulösen und darzustellen.

Diese Aufgabe wird gelöst durch die Merkmale der unabhängigen Ansprüche. Vorteilhafte Ausgestaltungen sind in den Unteransprüchen angegeben.

Die Erfindung zeichnet sich aus gemäß einem ersten Aspekt durch einen zweiten Polarisationsfilter, der den zweiten Beleuchtungslichtstrahl p-polarisiert und durch einen Modulator zum Modulieren des polarisierten zweiten Beleuchtungslichtstrahls. Eine Anregungsoptik lenkt die beiden Beleuchtungslichtstrahlen auf ein Objekt, insbesondere eine Probe. Eine Detektionsoptik richtet die von dem Objekt ausgehenden Detektionslichtstrahlen auf mindestens zwei Detektoreinheiten. Eine erste Detektoreinheit detektiert einen ersten nicht linearen Raman-Effekt und eine zweite Detektoreinheit detektiert einen zweiten nicht linearen Raman-Effekt.

Das Detektieren zweier unterschiedlicher nicht linearer Raman-Effekte mit einer einzigen Vorrichtung ermöglicht, zum einen schnell ablaufende mikroskopische Vorgänge präzise darzustellen und zum anderen die bei diesen Vorgängen beteiligten Strukturen mit hoher Präzision aufzulösen. Der erste Beleuchtungslichtstrahl ist durch seine zirkulare Polarisation gekennzeichnet und der zweite Beleuchtungslichtstrahl ist durch seine lineare Polarisation und seine Modulierbarkeit gekennzeichnet. Die Lichtquelle umfasst vorzugsweise eine oder zwei Licht erzeugende Einzelvorrichtungen, beispielsweise eine oder zwei Laservorrichtungen.

In diesem Zusammenhang ist es besonders vorteilhaft, wenn eine dritte Detektoreinheit zum Detektieren eines dritten nicht linearen Raman-Effekts vorgesehen ist. Ferner können jeweils zumindest zwei der drei nicht linearen Raman-Effekte gleichzeitig detektiert werden. Zusätzlich können alle drei nicht linearen Raman-Effekte gleichzeitig detektiert werden.

In einer vorteilhaften Ausgestaltung ist der erste Beleuchtungslichtstrahl ein Pumplaserstrahl und der zweite Beleuchtungslichtstrahl ein Stokeslaserstrahl. Ein erstes wellenlängenselektives Element richtet Strahlung eines ersten Wellenlängenbereichs des Detektionslichtstrahls, in dem Wellenlängen einer Stokes-Emission oder Antistokes-Emission liegen, über einen dritten Polarisationsfilter, der das Licht des ersten Wellenlängenbereichs p-polarisiert, auf einen ersten Detektor, der zumindest in dem ersten Wellenlängenbereich sensitiv ist. Ein zweites wellenlängenselektives Element trennt Strahlung eines zweiten Wellenlängenbereichs des Detektionslichtstrahls, in dem Wellenlängen des ersten Beleuchtungslichtstrahls liegen, von einem dritten Wellenlängenbereich, in dem Wellenlängen des zweiten Beleuchtungslichtstrahls liegen, und richtet die Strahlung des zweiten Wellenlängenbereichs auf einen zweiten Detektor, der in dem zweiten Wellenlängenbereich sensitiv ist. Ein vierter Polarisationsfilter p-polarisiert das Licht des zweiten Wellenlängenbereichs vor Auftreffen auf den zweiten Detektor. Ein Demodulator demoduliert das Ausgangssignal des zweiten Detektors. Ein fünfter Polarisationsfilter s-polarisiert das auf einen dritten Detektor gerichtete Licht des dritten Wellenlängenbereichs, wobei der dritte Detektor in dem dritten Wellenlängenbereich sensitiv ist. Der Demodulator kann auch in dem zweiten Detektor integriert sein. Die ersten bis dritten Detektoren können auch als Detektoreinheiten bezeichnet werden.

Dies ermöglicht, zumindest zwei der drei nicht linearen Raman-Effekte mit einer einzigen Vorrichtung zu detektieren und insbesondere zumindest zwei der drei nicht linearen Raman-Effekte gleichzeitig zu detektieren. Der Pumplaserstrahl und der Stokeslaserstrahl sind durch ihre Wellenlängen charakterisiert. Insbesondere hat der Pumplaserstrahl Wellenlängen zwischen 750 und 980 nm und der Stokeslaserstrahl hat eine Wellenlänge von 1064 nm. Vorzugsweise wird mit dem zweiten Detektor ein SRL-Signal und mit dem dritten Detektor ein RIKES-Signal detektiert.

Alternativ dazu ist der erste Beleuchtungslichtstrahl der Stokeslaserstrahl und der zweite Beleuchtungslichtstrahl der Pumplaserstrahl. Das erste wellenlängenselektive Element richtet den ersten Wellenlängenbereich des Detektionslichtstrahls über den dritten Polarisationsfilter auf den ersten Detektor. Das zweite wellenlängenselektive Element richtet Strahlung des zweiten Wellenlängenbereichs des Detektionslichtstrahls auf einen vierten Detektor, der zumindest in dem zweiten Wellenlängenbereich sensitiv ist. Ein sechster Polarisationsfilter s-polarisiert das Licht des zweiten Wellenlängenbereichs vor Auftreffen auf den vierten Detektor. Ein siebter Polarisationsfilter p-polarisiert das auf einen fünften Detektor, der in dem dritten Wellenlängenbereich sensitiv ist, gerichtete Licht des dritten Wellenlängenbereichs. Ein Demodulator demoduliert das Ausgangssignal des fünften Detektors. Der Demodulator kann auch in dem fünften Detektor integriert sein. Vorzugsweise wird mit dem vierten Detektor das RIKES-Signal und mit dem fünften Detektor ein SRG-Signal detektiert.

Die Präzision beim Untersuchen des Objekts kann weiter erhöht werden, indem die Komponenten so angeordnet sind, dass die bezogen auf die Beleuchtungslichtstrahlen in Vorwärtsrichtung emittierten Detektionsstrahlen und/oder die in Rückwärtsrichtung emittierten Detektionsstrahlen detektiert werden.

Die Erfindung zeichnet sich aus gemäß einem zweiten Aspekt der Erfindung durch ein Verfahren zum Untersuchen eines Objekts mit einem Mikroskop und insbesondere mit der Vorrichtung zum mikroskopischen Untersuchen eines Objekts. Dabei werden vorzugsweise das CARS- oder CSRS-Signal gleichzeitig mit dem RIKES-Signal detektiert.

Ausführungsbeispiele der Erfindung sind im Folgenden anhand von schematischen Zeichnungen näher erläutert. Es zeigen:
- Figur 1: eine erste Ausführungsform einer Vorrichtung zum mikroskopischen Untersuchen eines Objekts,
- Figur 2: eine zweite Ausführungsform der Vorrichtung zum mikroskopischen Untersuchen eines Objekts.

Elemente gleicher Konstruktion oder Funktion sind figurenübergreifend mit den gleichen Bezugszeichen gekennzeichnet.

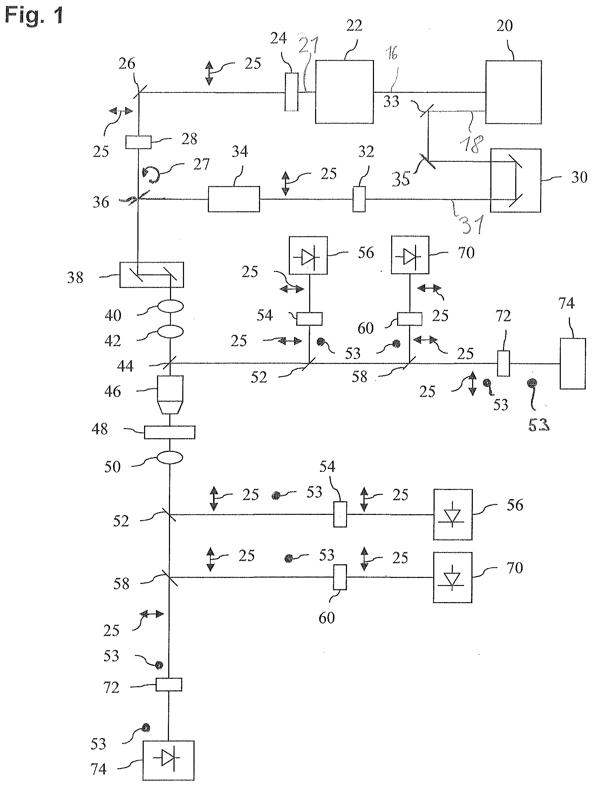

Figur 1 zeigt eine Vorrichtung zum mikroskopischen Untersuchen eines Objekts, insbesondere ein konfokales Scanmikroskop. Das Mikroskop umfasst ein Beleuchtungssystem. Das Beleuchtungssystem umfasst eine Lichtquelle 20, die Laserstrahlung erzeugt, die intern in einen ersten Laserstrahl 16 und einen zweiten Laserstrahl 18 aufgeteilt wird. Die Lichtquelle 20 umfasst beispielsweise einen OPO-Pumplaser. Der erste Laserstrahl 16 hat vorzugsweise eine Wellenlänge von 532 nm und der zweite Laserstrahl 18 hat vorzugsweise eine Wellenlänge von 1064 nm. Der erste Laserstrahl 16 durchläuft einen optisch parametrischen Oszillator 22 (OPO) des Beleuchtungssystems, mit dessen Hilfe die Wellenlänge des ersten Laserstrahls 16 zu Wellenlängen zwischen beispielsweise 750 nm und 980 nm konvertiert werden kann, und einen ersten Polarisationsfilter 24 des Beleuchtungssystems, der den konvertierten ersten Laserstrahl 16, der nach Durchlaufen des optisch parametrischen Oszillators 22 als Pumplaserstrahl 21 bezeichnet wird, p-polarisiert, was durch einen Pfeil 25 dargestellt ist. Ein erster Spiegel 26 lenkt den p-polarisierten Pumplaserstrahl 21 auf einen Zirkular-Polarisationsfilter 28 des Beleuchtungssystems, der den Pumplaserstrahl 21 zirkular polarisiert. Der Zirkular-Polarisationsfilter 28 umfasst vorzugsweise ein drehbares Lambda-Viertelplättchen. Die Lichtquelle 20 kann eine oder zwei einzelne Laservorrichtungen zum Erzeugen des ersten und zweiten Laserstrahls 16, 18 umfassen.

Der zweite Laserstrahl 18 wird nachfolgend als Stokeslaserstrahl 31 bezeichnet und ist über einen zweiten Spiegel 33, einen dritten Spiegel 35 und eine Verzögerungsstufe 30 auf einen zweiten Polarisationsfilter 32 des Beleuchtungssystems gerichtet, der den Stokeslaserstrahl 31 p-polarisiert. Zum Modulieren des p-polarisierten Stokeslaserstrahls 31 ist ein Modulator 34 des Beleuchtungssystems vorgesehen, beispielsweise ein acusto-optischer Modulator. Über einen ersten dichroitischen Strahlteiler 36 werden der zirkular polarisierte Pumplaserstrahl 21 und der p-polarisierte, gegebenenfalls modulierte, Stokeslaserstrahl 31 vereinigt und auf eine Scaneinheit 38 gelenkt. Ausgehend von der Scaneinheit 38 durchlaufen die beiden vereinigten Strahlen 21, 31 eine Scanlinse 40 und eine Tubuslinse 42 und sind über einen Strahlteiler 44 und ein Objektiv 46 auf die Probe 48 gerichtet.

Von der Probe 48 ausgehende Detektionsstrahlen sind in Vorwärts- und Rückwärtsrichtung der Beleuchtungslichtstrahlen 21, 31 über einen Kondensor 50 bzw. über den Strahlteiler 44 auf ein erstes wellenlängenselektives Element 52 gerichtet. Das erste wellenlängenselektive Element 52 umfasst beispielsweise einen dichroitischen Strahlteiler (long-pass) und lenkt den Anteil der Detektionslichtstrahlen, dessen Wellenlängen in einem ersten Wellenlängenbereich liegen, in Richtung hin zu einem dritten Polarisationsfilter 54 ab, der aus Anteilen der beiden Laserstrahlen 21, 31 den p-polarisierten Anteil herausfiltert und hin zu einem ersten Detektor 56 durchlässt. In dem ersten Wellenlängenbereich liegen Wellenlängen einer kohärenten Anti-Stokes Emission (CARS). Licht der Wellenlängen, die größer als die von CARS sind, lässt das erste wellenlängenselektive Element 52 durch.

Ein zweites wellenlängenselektives Element 58 umfasst beispielsweise einen dichroitischen Strahlteiler (long-pass) und lenkt einen Anteil des Detektionslichts, dessen Wellenlängen in einem zweiten Wellenlängenbereich liegen, hin zu einem vierten Polarisationsfilter 60 ab, der den p-polarisierten Anteil der beiden Laserstrahlen 21, 31 hin zu einem zweiten Detektor 70 durchlässt. Der zweite Detektor 70 umfasst beispielsweise eine großflächige Photodiode mit Lock-In-Detektion zur Demodulation und erfasst das SRL-Signal. Das zweite wellenlängenselektive Element 58 reflektiert Licht mit Wellenlängen, die der Pumplaserstrahlung entsprechen und lässt Licht größerer Wellenlängen durch. Das erste und das zweite wellenlängenselektive Element 52, 58 lassen die übrigen Wellenlängenanteile des Detektionslichts, insbesondere Strahlung eines dritten Wellenlängenbereichs, hin zu einem fünften Polarisationsfilter 72 durch, der lediglich den s-polarisierten Anteil der beiden Laserstrahlen 21, 31 hin zu einem dritten Detektor 74 durchlässt. Der dritte Detektor 74 erfasst das RIKES-Signal und umfasst vorzugsweise eine Photomultiplier-Röhre, die im nahen Infrarot sensibel ist. Im dritten Wellenlängenbereich liegt die Stokeslaserstrahlung.

Während des Betriebs des Mikroskops wird in einem ersten Schritt zur Aufnahme von schnellen Vorgängen in der Probe 48 der Stokeslaserstrahl 31 nicht moduliert und mit Hilfe des ersten wellenlängenselektiven Elements 52 wird der erste Wellenlängenbereich des Detektionslichtstrahls, in dem Wellenlängen der von der Probe 48 ausgehenden Antistokes-Emission (CARS) liegen, p-polarisiert und auf den ersten Detektor 56 gerichtet. Mit Hilfe des fünften Polarisationsfilters 72 wird Strahlung des dritten Wellenlängenbereichs des Detektionslichtstrahls s-polarisiert und auf den dritten Detektor 74 gerichtet. Somit wird mit dem ersten Detektor 56 das CARS-Signal detektiert und vorzugsweise wird gleichzeitig mit dem dritten Detektor 74 das RIKES-Signal detektiert. Auf diese Weise ist das CARS-Signal besonders stark und das RIKES-Signal ist nahezu frei von nicht resonanter Hintergrundstrahlung.

In einem zweiten Schritt wird der Stokeslaserstrahl 31 mit Hilfe des Modulators 34 moduliert. Strahlung des zweiten Wellenlängenbereichs des Detektionslichtstrahls wird p-polarisiert und auf den zweiten Detektor 70 gerichtet. Ein Ausgangssignal des zweiten Detektors 70 wird dann zum Gewinnen des Messsignals mit Hilfe eines im zweiten Detektor 70 integrierten Demodulators demoduliert. Der Demodulator kann alternativ dazu auch als eigenes Bauteil ausgebildet sein. Das demodulierte SRL-Signal wird für eine quantitative Analyse verwendet.

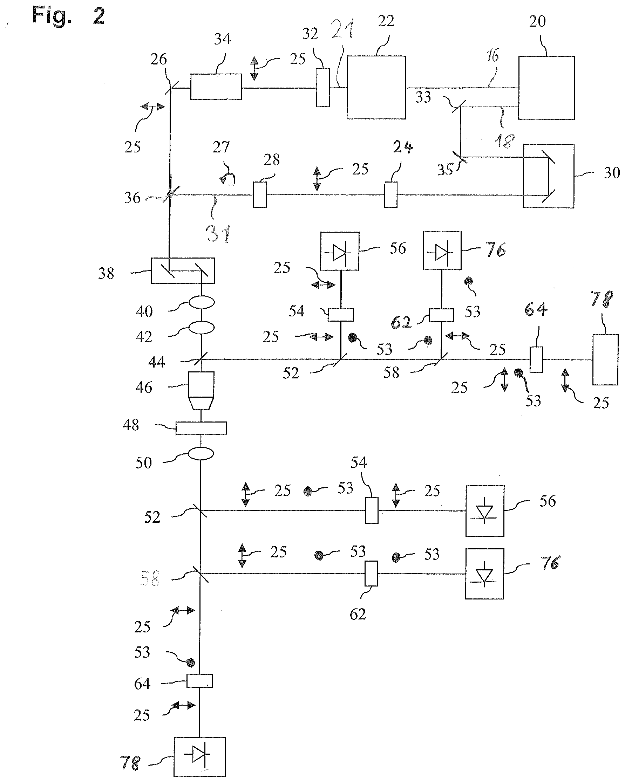

Figur 2 zeigt eine alternative Ausführungsform des Mikroskops. Bei der alternativen Ausführungsform des Mikroskops ist der Pumplaserstrahl 21 auf den zweiten Polarisationsfilter 32 gerichtet ist. Der p-polarisierte Pumplaserstrahl 21 kann dann mit Hilfe des Modulators 34 moduliert werden. Der erste Spiegel 26 richtet den gegebenenfalls modulierten p-polarisierten Pumplaserstrahl 21 über einen dichroitischen Strahlteiler 36 auf die Scaneinheit 38.

Der Stokeslaserstrahl 31 trifft ausgehend von der Lichtquelle 20 auf den zweiten Spiegel 33 und den dritten Spiegel 35, die den Stokeslaserstrahl 31 hin zu der Verzögerungsstufe 30 ablenken. Der verzögerte Stokeslaserstrahl 31 durchläuft dann den ersten Polarisationsfilter 24, der den Stokeslaserstrahl 31 p-polarisiert. Der p-polarisierte Stokeslaserstrahl 31 durchläuft dann den Zirkular-Polarisationsfilter 28, der den Stokeslaserstrahl 31 zirkular polarisiert. Der dichroitische Strahlteiler 36 vereinigt die beiden Laserstrahlen 21, 31, so dass diese vorzugsweise kolinear auf die Scaneinheit 38 treffen. Die vereinten Laserstrahlen 21, 31 durchlaufen die Scaneinheit 38 und sind über die Scanlinse 40, die Tubuslinse 42, den Strahlteiler 44 und das Objektiv 46 auf die Probe 48 gerichtet.

Die von der Probe 48 ausgehenden Detektionslichtstrahlen verlaufen in Vorwärtsrichtung über den Kondensor 50 und in Rückwärtsrichtung über den Strahlteiler 44 zu den wellenlängenselektiven Elementen 52, 58 und den Detektoren 56, 76, 78. Das erste wellenlängenselektive Element 52 und die diesem nachgeschalteten Elemente wie der dritte Polarisationsfilter 54 und der erste Detektor 56 sowie das zweite wellenlängenselektive Element 58 entsprechen den mit dem gleichen Bezugszeichen bezeichneten Elementen des ersten Ausführungsbeispiels. Im Gegensatz zum ersten Ausführungsbeispiel wird jedoch die Strahlung des zweiten Wellenlängenbereichs des Detektionslichtstrahls hin zu einem sechsten Polarisationsfilter 62, der die Strahlung des zweiten Wellenlängenbereichs s-polarisiert, und dann hin zu einem vierten Detektor 76 abgelenkt, der den raman-induzierten Kerr Effekt erfasst. Der vierte Detektor 74 umfasst vorzugsweise eine Photomultiplier-Röhre, die im nahen Infrarot sensibel ist. Darüber hinaus wird der Anteil des Detektionslichts, der nicht von dem ersten und dem zweiten wellenlängenselektiven Element 52, 58 abgelenkt wird, insbesondere Detektionslicht des dritten Wellenlängenbereichs im Gegensatz zu dem ersten Ausführungsbeispiel über einen siebten Polarisationsfilter 64, der diesen Anteil des Detektionslichts p-polarisiert, auf einen fünften Detektor 78 gerichtet, der zumindest in dem dritten Wellenlängenbereich sensitiv ist. Der fünfte Detektor 78 umfasst beispielsweise eine großflächige Photodiode mit Lock-In-Detektion zur Demodulation und erfasst somit das SRG-Signal.

Während des Betriebs des Mikroskops gemäß dem zweiten Ausführungsbeispiel wird der Stokeslaserstrahl 31 mit der festen Wellenlänge von 1064 nm zirkular polarisiert und der Pumplaserstrahl 21 ist modulierbar. In einem ersten Schritt wird zum Erkennen von schnell ablaufenden Vorgängen in der Probe 48 der Pumplaserstrahl 21 nicht moduliert und mit Hilfe des ersten wellenlängenselektiven Elements 52 wird Strahlung des ersten Wellenlängenbereichs des Detektionslichtstrahls p-polarisiert und auf den ersten Detektor 56 gerichtet. Mit Hilfe des sechsten Polarisationsfilters 62 wird vorzugsweise gleichzeitig Strahlung des zweiten Wellenlängenbereichs des Detektionslichtstrahls s-polarisiert und auf den vierten Detektor 76 gerichtet, wobei der vierte Detektor 76 zumindest in dem zweiten Wellenlängenbereich sensitiv ist und das RIKES-Signal bei Wellenlängen der Pumplaserstrahlung detektiert.

In einem zweiten Schritt wird der Pumplaserstrahl 21 mit Hilfe des Modulators 34 moduliert. Strahlung des dritten Wellenlängenbereichs des Detektionslichtstrahls wird p-polarisiert und auf den fünften Detektor 78 gerichtet, der zumindest in dem dritten Wellenlängenbereich sensitiv ist. Ein Ausgangssignal des fünften Detektors 78 wird dann zum Gewinnen des Messsignals, insbesondere des SRG-Signals, demoduliert.

Das erste wellenlängenselektive Element 52 wird bei beiden Ausführungsbeispielen vorzugsweise in Abhängigkeit der Pumplaserstrahlung so gewählt, dass es die Wellenlängen der Pumplaserstrahlung und größere Wellenlängen durchlässt und dass es die Wellenlängen der CARS- oder CSRS-Emission reflektiert. Das zweite wellenlängenselektive Element 58 wird bei beiden Ausführungsbeispielen vorzugsweise in Abhängigkeit der Pumplaserstrahlung so gewählt, dass es größere Wellenlängen als die der Pumplaserstrahlung durchlässt, insbesondere die der Stokeslaserstrahlung und die Wellenlängen der Pumplaserstrahlung reflektiert.

Die beiden Ausführungsbeispiele der Erfindung ermöglichen jeweils drei unterschiedliche nicht lineare Raman-Effekte zu detektieren, wobei zwei der Raman-Effekte, nämlich CARS und RIKES gleichzeitig detektiert werden können. Bei dem ersten Ausführungsbeispiel ist zusätzlich das SRL-Signal detektierbar und bei dem zweiten Ausführungsbeispiel ist zusätzlich das SRG-Signal detektierbar. Der Pumplaserstrahl 21 und der Stokeslaserstrahl 31 sind durch ihre Wellenlänge charakterisiert. Der erste Detektor 56 ist ein CARS-Detektor. Der zweite Detektor 70 ist ein Pump-Detektor zur SRL-Detektion. Der dritte Detektor 74 ist ein Stokes-Detektor zur RIKES-Detektion. Der vierte Detektor 76 ist ein Pump-Detektor zur RIKES-Detektion. Der fünfte Detektor 78 ist ein Stokes-Detektor zur SRG-Detektion. Die ersten bis fünften Detektoren 56, 70, 74, 76, 78 können auch als Detektoreinheiten bezeichnet werden.

Je nach Ausführungsbeispiel ist entweder der Pumplaserstrahl 21 zirkular polarisiert und der Stokeslaserstrahl 31 ist modulierbar oder der Stokeslaserstrahl 31 ist zirkular polarisiert und der Pumplaserstrahl 21 ist modulierbar. In diesem Zusammenhang wird der Laserstrahl, der zirkular polarisiert, ist als erster Beleuchtungslichtstrahl bezeichnet und der Laserstrahl, der modulierbar ist, wird als zweiter Beleuchtungslichtstrahl bezeichnet.

Die Erfindung ist nicht auf die angegebenen Ausführungsbeispiele beschränkt. Beispielsweise können bei beiden Ausführungsbeispielen die Detektionslichtstrahlen ausschließlich in Vorwärts- oder in Rückwärtsrichtung detektiert werden. Vorzugsweise werden das RIKES- und das CARS-Signal gleichzeitig detektiert. Alternativ dazu kann auch das SRS-Signal gleichzeitig mit den beiden anderen Signalen oder einem der beiden anderen detektiert werden, wobei dann der Vorteil der schnellen Bildaufnahme verloren geht. Alternativ dazu können auch RIKES- und SRS-Signal oder das CARS- und das SRS-Signal gleichzeitig detektiert werden oder es können alle drei Signale nacheinander oder alle drei gleichzeitig detektiert werden. Alternativ zu dem OPO 22 kann die Wellenlänge des ersten Laserstrahls 16 auch auf andere bekannte Weisen verändert werden. Alternativ zu CARS kann bei beiden Ausführungsbeispielen auch CSRS detektiert werden, wobei dann das erste wellenlängenselektive Element 52 ein kurz-pass dichroitischer Strahlteiler ist, der Detektionslicht mit Wellenlängen der CSRS-Emission reflektiert und Detektionslicht kürzerer Wellenlängen, insbesondere die der Pumplaserstrahlung und die der Stokeslaserstrahlung durchlässt. Ferner kann auch die Wellenlänge der Pumplaserstrahlung fest vorgegeben sein und die Wellenlänge der Stokeslaserstrahlung kann variierbar sein.

### Bezugszeichenliste:

- 16: erster Laserstrahl
- 18: zweiter Laserstrahl
- 20: Lichtquelle
- 21: Pumplaserstrahl
- 22: OPO
- 24: erster Polarisationsfilter
- 25: Pfeil p-polarisiert
- 26: erster Spiegel
- 27: Pfeil zirkular-polarisiert
- 28: Zirkular-Polarisationsfilter
- 30: Verzögerungsstufe
- 31: Stokeslaserstrahl
- 32: zweiter Polarisationsfilter
- 33: zweiter Spiegel
- 34: Modulator
- 35: dritter Spiegel
- 36: dichroitischer Stahlteiler
- 38: Scaneinheit
- 40: Scanlinse
- 42: Tubuslinse
- 44: Strahlteiler
- 46: Objektiv
- 48: Probe
- 50: Kondensor
- 52: erstes wellenlängenselektives Element
- 53: Punkt s-polarisiert
- 54: dritter Polarisationsfilter
- 56: erster Detektor
- 58: zweites wellenlängenselektives Element
- 60: vierter Polarisationsfilter
- 62: sechster Polarisationsfilter (vierter Polarisationsfilter in den Ansprüchen)
- 64: siebter Polarisationsfilter (fünfter Polarisationsfilter in den Ansprüchen)
- 70: zweiter Detektor
- 72: fünfter Polarisationsfilter
- 74: dritter Detektor
- 76: vierter Detektor (zweiter Detektor in den Ansprüchen)
- 78: fünfter Detektor (dritter Detektor in den Ansprüchen)

## Patentansprüche

1. Vorrichtung zum mikroskopischen Untersuchen eines Objekts,
mit einem Beleuchtungssystem (20), das dazu eingerichtet ist, einen ersten Beleuchtungslichtstrahl und einen zweiten Beleuchtungslichtstrahl und in einem beleuchteten Objekt (48) nicht lineare Raman-Effekte zu erzeugen,
einem ersten Zirkular-Polarisationsfilter (28), der den ersten Beleuchtungslichtstrahl zirkular polarisiert,
einem zweiten Polarisationsfilter (32), der den zweiten Beleuchtungslichtstrahl linear p-polarisiert,
einem Modulator (34) zum Modulieren des polarisierten zweiten Beleuchtungslichtstrahls,
einer Anregungsoptik, die die beiden Beleuchtungslichtstrahlen (21, 31) auf das Objekt (48) lenkt,
einer Detektionsoptik, einem ersten wellenlängenselektiven Element (52), einem dritten Polarisationsfilter (54) und mindestens zwei Detektoren (56, 70, 76),
wobei die Detektionsoptik die von dem Objekt (48) ausgehende Detektionslichtstrahlen auf die mindestens zwei Detektoren (56, 70, 76) richtet,
wobei das erste wellenlängenselektiven Element (52) dazu ausgebildet ist, einen ersten Wellenlängenbereich der Detektionslichtstrahlen in Richtung hin zu dem dritten Polarisationsfilter (54) ab zu lenken,
wobei der dritte Polarisationsfilter (54) den p-polarisierten Anteil der Detektionslichtstrahlen herausfiltert und hin zu dem ersten Detektor (56) durchlässt,
wobei der erste Detektor (56) einen ersten nicht linearen Raman-Effekt detektiert und
der zweite Detektor (70, 76) einen zweiten nicht linearen Raman-Effekt detektiert.

2. Vorrichtung nach Anspruch 1, mit einem dritten Detektor (74, 78) der einen dritten nicht linearen Raman-Effekt detektiert.

3. Vorrichtung nach Anspruch 2, bei der je zwei der drei Detektoren (56 und 74 oder 78) den entsprechenden nicht linearen Raman-Effekt gleichzeitig detektieren.

4. Vorrichtung nach einem der Ansprüche 2 und 3,
bei der der erste Beleuchtungslichtstrahl ein Pumplaserstrahl (21) ist und bei der der zweite Beleuchtungslichtstrahl ein Stokeslaserstrahl (31) ist,
mit dem ersten wellenlängenselektiven Element (52), das einen ersten Wellenlängenbereich des Detektionslichtstrahls, in dem Wellenlängen einer Stokes-Emission oder Antistokes-Emission liegen, über einen dritten Polarisationsfilter (54), der das Licht des ersten Wellenlängenbereichs linear p-polarisiert, auf den ersten Detektor (56) richtet, der in dem ersten Wellenlängenbereich sensitiv ist,
einem zweiten wellenlängenselektiven Element (58), das einen zweiten Wellenlängenbereich des Detektionslichtstrahls, in dem Wellenlängen des Pumplaserstrahls (21) liegen, von einem dritten Wellenlängenbereich trennt, in dem Wellenlängen des Stokeslaserstrahls (31) liegen, und auf den zweiten Detektor (70) richtet, der in dem zweiten Wellenlängenbereich sensitiv ist,
einem vierten Polarisationsfilter (60), der das Licht des zweiten Wellenlängenbereichs vor Auftreffen auf den zweiten Detektor (70) linear p-polarisiert,
einem Demodulator zum Demodulieren des Ausgangssignals des zweiten Detektors (70),
und mit einem fünften Polarisationsfilter (72), der das auf den dritten Detektor (74), der in dem dritten Wellenlängenbereich sensitiv ist, gerichtete Licht des dritten Wellenlängenbereichs s-polarisiert.

5. Vorrichtung nach einem der Ansprüche 1 bis 3,
bei der der erste Beleuchtungslichtstrahl ein Stokeslaserstrahl ist und bei dem der zweite Beleuchtungslichtstrahl ein Pumplaserstrahl ist,
mit einem ersten wellenlängenselektiven Element (52), das einen ersten Wellenlängenbereich des Detektionslichtstrahls, in dem eine Stokes-Emission oder Antistokes-Emission liegt, über einen dritten Polarisationsfilter (54), der das Licht des ersten Wellenlängenbereichs linear p-polarisiert, auf den ersten Detektor (56) richtet, der in dem ersten Wellenlängenbereich sensitiv ist,
dem zweiten wellenlängenselektiven Element (58), das einen zweiten Wellenlängenbereich des Detektionslichtstrahls, in dem Wellenlängen des Pumplaserstrahls liegen, von einem dritten Wellenlängenbereich trennt, in dem Wellenlängen des Stokeslaserstrahls liegen, und auf einen zweiten Detektor (76) richtet, der in dem dritten Wellenlängenbereich sensitiv ist,
einem vierten Polarisationsfilter (62), der das Licht des zweiten Wellenlängenbereichs vor Auftreffen auf den zweiten Detektor (76) s-polarisiert,
einem fünften Polarisationsfilter (64), der das auf einen dritten Detektor (78), der
in dem dritten Wellenlängenbereich sensitiv ist, gerichtete Licht des dritten Wellenlängenbereichs linear p-polarisiert,
und mit einem Demodulator zum Demodulieren des Ausgangssignals des dritten Detektors (78).

6. Verfahren zum Untersuchen eines Objekts (48) mit einem Mikroskop,
bei dem ein erster Beleuchtungslichtstrahl erzeugt wird,
der erste Beleuchtungslichtstrahl zirkular polarisiert wird,
ein zweiter Beleuchtungslichtstrahl erzeugt wird,
der zweite Beleuchtungslichtstrahl linear p-polarisiert wird,
die beiden polarisierten Beleuchtungslichtstrahlen (21, 31) über eine Anregungsoptik auf das Objekt (48) gelenkt werden,
und bei dem von dem Objekt (48) ausgehende Detektionslichtstrahlen über eine Detektionsoptik auf mindestens zwei Detektoren (56, 74, 76) gerichtet werden,
wobei der zweite Beleuchtungslichtstrahl in einem ersten Schritt nicht moduliert wird, wobei mit dem ersten Detektor (56) ein erster nicht linearer Raman-Effekt detektiert wird und mit einer zweiten Detektor (74, 76) ein zweiter nicht linearer Raman-Effekt detektiert wird, wobei der erste und der zweite nicht lineare Raman-Effekt gleichzeitig detektiert werden.

7. Verfahren nach Anspruch 6,
bei dem der erste Beleuchtungslichtstrahl ein Pumplaserstrahl ist und bei dem der zweite Beleuchtungslichtstrahl ein Stokeslaserstrahl ist,
und bei dem, wenn der Stokeslaserstrahl nicht moduliert wird,
Strahlung eines ersten Wellenlängenbereichs des Detektionslichtstrahls, in dem Wellenlängen der von der Probe (48) ausgehenden Stokes-Emission oder Antistokes-Emission liegen, linear p-polarisiert und auf den ersten Detektor (56) gerichtet wird, der in dem ersten Wellenlängenbereich sensitiv ist,
und Strahlung eines dritten Wellenlängenbereichs des Detektionslichtstrahls, in dem Wellenlängen des Stokeslaserstrahls (31) liegen, s-polarisiert und auf einen zweiten Detektor (74) gerichtet wird, der in dem dritten Wellenlängenbereich sensitiv ist.

8. Verfahren nach Anspruch 6,
bei dem der erste Beleuchtungslichtstrahl ein Stokeslaserstrahl ist und bei dem der zweite Beleuchtungslichtstrahl ein Pumplaserstrahl ist,
und bei dem, wenn der Pumplaserstrahl nicht moduliert wird,
Strahlung eines ersten Wellenlängenbereichs des Detektionslichtstrahls, in dem Wellenlängen der von der Probe ausgehenden Stokes-Emission oder Antistokes-Emission liegen, linear p-polarisiert und auf den ersten Detektor (56) gerichtet wird, der in dem ersten Wellenlängenbereich sensitiv ist,
und bei dem Strahlung eines zweiten Wellenlängenbereichs des Detektionslichtstrahls, in dem Wellenlängen des Pumplaserstrahls liegen, s-polarisiert und auf einen zweiten Detektor (76) gerichtet wird, der in dem zweiten Wellenlängenbereich sensitiv ist.

9. Verfahren nach einem der Ansprüche 6 bis 8, bei dem in einem zweiten Schritt der zweite Beleuchtungslichtstrahl moduliert wird, wobei mit einem dritten Detektor (70, 78) ein dritter nicht linearer Raman-Effekt detektiert wird.

10. Verfahren nach den Ansprüchen 8 und 9,
und bei dem, wenn der Pumplaserstrahl (21) moduliert wird,
Strahlung des dritten Wellenlängenbereichs des Detektionslichtstrahls p-polarisiert und auf einen dritten Detektor (78) gerichtet wird, der in dem dritten Wellenlängenbereich sensitiv ist,
ein Ausgangssignal des dritten Detektors (78) demoduliert wird.

## Claims

1. A device for the microscopic examination of an object, with an illumination system (20) that is configured to generate a first illumination light beam and a second illumination light beam and in an illuminated object (48) non-linear Raman effects,
a first circular polarization filter (28) that circularly polarizes the first illumination light beam,
a second polarization filter (32) that linearly p-polarizes the second illumination light beam,
a modulator (34) for modulating the polarized second illumination light beam,
an excitation optical system that directs the two illumination light beams (21, 31) onto the object (48), a detection optical system, a first wavelength-selective element (52), a third polarization filter (54) and at least two detectors (56, 70, 76),
wherein the detection optical system directs the detection light beams emanating from the object (48) onto the at least two detectors (56, 70, 76),
wherein the first wavelength-selective element (52) is configured to deflect a first wavelength range of the detection light beams towards the third polarization filter (54),
wherein the third polarization filter (54) filters out the p-polarized portion of the detection light beams and transmits it to the first detector (56),
the first detector (56) detecting a first non-linear Raman effect and
the second detector (70, 76) detecting a second non-linear Raman effect.

2. The device according to claim 1,
with a third detector (74, 78) that detects a third non-linear Raman effect.

3. The device according to claim 2,
in which each time two of the three detectors (56 and 74 or 78) simultaneously detect the respective non-linear Raman effect.

4. The device according to one of the claims 2 and 3, in which the first illumination light beam is a pump laser beam (21) and in which the second illumination light beam is a Stokes laser beam (31),
with the first wavelength-selective element (52) that directs a first wavelength range of the detection light beam, in which wavelengths of a Stokes emission or anti-Stokes emission lie, via a third polarization filter (54) that linearly p-polarizes the light of the first wavelength range onto the first detector (56) that is sensitive in the first wavelength range,
a second wavelength-selective element (58) that separates a second wavelength range of the detection light beam, in which wavelengths of the pump laser beam (21) lie, from a third wavelength range, in which wavelengths of the Stokes laser beam (31) lie, and directs it onto a second detector (70) that is sensitive in the second wavelength range,
a fourth polarization filter (60) that linearly p-polarizes the light of the second wavelength range before it is incident on the second detector (70),
a demodulator for demodulating the output signal of the second detector (70),
and with a fifth polarization filter (72) that s-polarizes the light of the third wavelength range that is directed onto the third detector (74) that is sensitive in the third wavelength range.

5. The device according to one of the claims 1 to 3,
in which the first illumination light beam is a Stokes laser beam and in which the second illumination light beam is a pump laser beam,
with a first wavelength-selective element (52) that directs a first wavelength range of the detection light beam, in which a Stokes emission or anti-Stokes emission lies, via a third polarization filter (54) that linearly p-polarizes the light of the first wavelength range onto the first detector (56) that is sensitive in the first wavelength range,
the second wavelength-selective element (58) that separates a second wavelength range of the detection light beam, in which the wavelengths of the pump laser beam lie, from a third wavelength range, in which wavelengths of the Stokes laser beam lie, and directs it onto a second detector (76) that is sensitive in the third wavelength range,
a fourth polarization filter (62) that s-polarizes the light of the second wavelength range before it is incident on the second detector (76),
a fifth polarization filter (64) that linearly p-polarizes the light of the third wavelength range directed onto a third detector (78) that is sensitive in the third wavelength range,
and with a demodulator for demodulating the output signal of the third detector (78).

6. A method for examining an object (48) with a microscope,
in which a first illumination light beam is generated, the first illumination light beam is circularly polarized, a second illumination light beam is generated,
the second illumination light beam is linearly p-polarized,
the two polarized illumination light beams (21, 31) are directed onto the object (48) via an excitation optical system,
and in which detection light beams emanating from the object (48) are directed onto at least two detectors (56, 74, 76) via a detection optical system,
wherein the second illumination light beam is not modulated in a first step, wherein with the first detector (56) a first non-linear Raman effect is detected and with a second detector (74, 76) a second non-linear Raman effect is detected, wherein the first and the second non-linear Raman effects are detected simultaneously.

7. The method according to claim 6,
in which the first illumination light beam is a pump laser beam and in which the second illumination light beam is a Stokes laser beam,
and in which, when the Stokes laser beam is not modulated, radiation of a first wavelength range of the detection light beam, in which wavelengths of the Stokes emission or anti-Stokes emission emanating from the sample (48) lie, is linearly p-polarized and directed onto the first detector (56) that is sensitive in the first wavelength range,
and radiation of a third wavelength range of the detection light beam, in which wavelengths of the Stokes laser beam (31) lie, is s-polarized and directed onto a second detector (74) that is sensitive in the third wavelength range.

8. The method according to claim 6,
in which the first illumination light beam is a Stokes laser beam and in which the second illumination light beam is a pump laser beam,
and in which, when the pump laser beam is not modulated, radiation of a first wavelength range of the detection light beam, in which wavelengths of the Stokes emission or anti-Stokes emission emanating from the sample lie, is linearly p-polarized and directed onto a first detector (56) that is sensitive in the first wavelength range,
and in which radiation of a second wavelength range of the detection light beam, in which wavelengths of the pump laser beam lie, is s-polarized and directed onto a second detector (76) that is sensitive in the second wavelength range.

9. The method according to one of the claims 6 to 8,
in which in a second step the second illumination light beam is modulated, wherein with a third detector (70, 78) a third non-linear Raman effect is detected.

10. The method according to claims 8 and 9,
and in which, when the pump laser beam (21) is modulated, radiation of the third wavelength range of the detection light beam is p-polarized and directed onto a third detector (78) that is sensitive in the third wavelength range,
an output signal of the third detector (78) is demodulated.

## Revendications

1. Dispositif pour l'examen microscopique d'un objet, comprenant un système d'éclairage (20) conçu pour générer un premier faisceau lumineux d'éclairage et un deuxième faisceau lumineux d'éclairage et des effets Raman non linéaires dans un objet éclairé (48),
un premier filtre de polarisation circulaire (28) qui polarise circulairement le premier faisceau lumineux d'éclairage,
un deuxième filtre de polarisation (32) qui polarise linéairement en polarisation p le deuxième faisceau lumineux d'éclairage,
un modulateur (34) pour moduler le deuxième faisceau lumineux d'éclairage polarisé,
une optique d'excitation qui dévie les deux faisceaux lumineux d'éclairage (21, 31) vers l'objet (48),
une optique de détection, un premier élément sélectif en longueur d'onde (52), un troisième filtre de polarisation (54) et au moins deux détecteurs (56, 70, 76),
dans lequel l'optique de détection dirige les faisceaux lumineux de détection émanant de l'objet (48) vers les au moins deux détecteurs (56, 70, 76),
dans lequel le premier élément sélectif en longueur d'onde (52) est conçu pour dévier une première plage de longueurs d'onde des faisceaux lumineux de détection vers le troisième filtre de polarisation (54),
dans lequel le troisième filtre de polarisation (54) filtre la partie polarisée en polarisation p des faisceaux lumineux de détection et la transmet vers le premier détecteur (56),
dans lequel le premier détecteur (56) détecte un premier effet Raman non linéaire et le deuxième détecteur (70, 76) détecte un deuxième effet Raman non linéaire.

2. Dispositif selon la revendication 1,
comprenant un troisième détecteur (74, 78) qui détecte un troisième effet Raman non linéaire.

3. Dispositif selon la revendication 2,
dans lequel deux des trois détecteurs (56 et 74 ou 78) détectent simultanément l'effet Raman non linéaire correspondant.

4. Dispositif selon l'une des revendications 2 et 3, dans lequel le premier faisceau lumineux d'éclairage est un faisceau laser de pompage (21) et dans lequel le deuxième faisceau lumineux d'éclairage est un faisceau laser de Stokes (31), comprenant
le premier élément sélectif en longueur d'onde (52) qui dirige une première plage de longueurs d'onde du faisceau lumineux de détection dans laquelle se trouvent des longueurs d'onde d'une émission Stokes ou d'une émission Antistokes, vers le premier détecteur (56) qui est sensible dans la première plage de longueurs d'onde, par l'intermédiaire d'un troisième filtre de polarisation (54) qui polarise linéairement en polarisation p la lumière de la première plage de longueurs d'onde,
un deuxième élément sélectif en longueur d'onde (58) qui sépare une deuxième plage de longueurs d'onde du faisceau lumineux de détection dans laquelle se trouvent des longueurs d'onde du faisceau laser de pompage (21), d'une troisième plage de longueurs d'onde dans laquelle se trouvent des longueurs d'onde du faisceau laser de Stokes (31), et la dirige vers le deuxième détecteur (70) qui est sensible dans la deuxième plage de longueurs d'onde, un quatrième filtre de polarisation (60) qui polarise linéairement en polarisation p la lumière de la deuxième plage de longueurs d'onde avant qu'elle n'atteigne le deuxième détecteur (70),
un démodulateur pour démoduler le signal de sortie du deuxième détecteur (70),
et comprenant un cinquième filtre de polarisation (72) qui polarise en polarisation s la lumière de la troisième plage de longueurs d'onde, dirigée vers le troisième détecteur (74) qui est sensible dans la troisième plage de longueurs d'onde.

5. Dispositif selon l'une des revendications 1 à 3, dans lequel le premier faisceau lumineux d'éclairage est un faisceau laser de Stokes et dans lequel le deuxième faisceau lumineux d'éclairage est un faisceau laser de pompage, comprenant
un premier élément sélectif en longueur d'onde (52) qui polarise linéairement en polarisation p une première plage de longueurs d'onde du faisceau lumineux de détection dans laquelle se trouve une émission Stokes ou une émission Antistokes, par l'intermédiaire d'un troisième filtre de polarisation (54) qui polarise linéairement en polarisation p la lumière de la première plage de longueurs d'onde, et la dirige vers le premier détecteur (56) qui est sensible dans la première plage de longueurs d'onde,
le deuxième élément sélectif en longueur d'onde (58) qui sépare une deuxième plage de longueurs d'onde du faisceau lumineux de détection dans laquelle se trouvent des longueurs d'onde du faisceau laser de pompage, d'une troisième plage de longueurs d'onde dans laquelle se trouvent des longueurs d'onde du faisceau laser de Stokes, et la dirige vers un deuxième détecteur (76) qui est sensible dans la troisième plage de longueurs d'onde, un quatrième filtre de polarisation (62) qui polarise en polarisation s la lumière de la deuxième plage de longueurs d'onde avant qu'elle n'atteigne le deuxième détecteur (76),
un cinquième filtre de polarisation (64) qui polarise linéairement en polarisation p la lumière de la troisième plage de longueurs d'onde dirigée vers un troisième détecteur (78) qui est sensible dans la troisième plage de longueurs d'onde, et
comprenant un démodulateur pour démoduler le signal de sortie du troisième détecteur (78).

6. Procédé d'examen d'un objet (48) au moyen d'un microscope,
dans lequel un premier faisceau lumineux d'éclairage est généré, le premier faisceau lumineux d'éclairage est polarisé circulairement,
un deuxième faisceau lumineux d'éclairage est généré,
le deuxième faisceau lumineux d'éclairage est polarisé linéairement en polarisation p,
les deux faisceaux lumineux d'éclairage polarisés (21, 31) sont dirigés vers l'objet (48) par l'intermédiaire d'une optique d'excitation, et
dans lequel des faisceaux lumineux de détection émanant de l'objet (48) sont dirigés vers au moins deux détecteurs (56, 74, 76) par l'intermédiaire d'une optique de détection,
dans lequel le deuxième faisceau lumineux d'éclairage n'est pas modulé lors d'une première étape, dans lequel un premier effet Raman non linéaire est détecté au moyen du premier détecteur (56) et un deuxième effet Raman non linéaire (74, 76) est détecté au moyen d'un deuxième détecteur, dans lequel les premier et deuxième effets Raman non linéaire sont détectés simultanément.

7. Procédé selon la revendication 6,
dans lequel le premier faisceau lumineux d'éclairage est un faisceau laser de pompage et dans lequel le deuxième faisceau lumineux d'éclairage est un faisceau laser de Stokes,
et dans lequel, lorsque le faisceau laser de Stokes n'est pas modulé, un rayonnement d'une première plage de longueurs d'onde du faisceau lumineux de détection dans laquelle se trouvent des longueurs d'onde de l'émission Stokes ou de l'émission Antistokes émanant de l'échantillon (48), est polarisé linéairement en polarisation p et dirigé vers le premier détecteur (56), qui est sensible dans la première plage de longueurs d'onde, et un rayonnement d'une troisième plage de longueurs d'onde du faisceau lumineux de détection dans laquelle se trouvent des longueurs d'onde du faisceau laser de Stokes (31), est polarisé en polarisation s et est dirigé vers un deuxième détecteur (74) qui est sensible dans la troisième plage de longueurs d'onde.

8. Procédé selon la revendication 6,
dans lequel le premier faisceau lumineux d'éclairage est un faisceau laser de Stokes et dans lequel le deuxième faisceau lumineux d'éclairage est un faisceau laser de pompage,
et dans lequel, lorsque le faisceau laser de pompage n'est pas modulé, un rayonnement d'une première plage de longueurs d'onde du faisceau lumineux de détection dans laquelle se trouvent des longueurs d'onde de l'émission Stokes ou de l'émission Antistokes émanant de l'échantillon, est polarisé linéairement en polarisation p et est dirigé vers le premier détecteur (56) qui est sensible dans la première plage de longueurs d'onde,
et dans lequel un rayonnement d'une deuxième plage de longueurs d'onde du faisceau lumineux de détection dans laquelle se trouvent des longueurs d'onde du faisceau laser de pompage, est polarisé en polarisation s et est dirigé vers un deuxième détecteur (76) qui est sensible dans la deuxième plage de longueurs d'onde.

9. Procédé selon l'une des revendications 6 à 8,
dans lequel, lors d'une deuxième étape, le deuxième faisceau lumineux d'éclairage est modulé, dans lequel un troisième effet Raman non linéaire est détecté au moyen d'un troisième détecteur (70, 78).

10. Procédé selon les revendications 8 et 9,
et dans lequel, lorsque le faisceau laser de pompage (21) est modulé, un rayonnement de la troisième plage de longueurs d'onde du faisceau lumineux de détection est polarisé en polarisation p et est dirigé vers un troisième détecteur (78) qui est sensible dans la troisième plage de longueurs d'onde, et un signal de sortie du troisième détecteur (78) est démodulé.
